(19) Europäisches Patentamt / European Patent Office / Office européen des brevets

(11) **EP 4 450 476 A1**

(12) **EUROPEAN PATENT APPLICATION**
published in accordance with Art. 153(4) EPC

(43) Date of publication:
**23.10.2024 Bulletin 2024/43**

(21) Application number: **22907042.0**

(22) Date of filing: **27.10.2022**

(51) International Patent Classification (IPC):
**C04B 35/44** (2006.01)    **C04B 35/50** (2006.01)
**G02F 1/09** (2006.01)

(52) Cooperative Patent Classification (CPC):
**C04B 35/44; C04B 35/50; G02F 1/09**

(86) International application number:
**PCT/JP2022/040203**

(87) International publication number:
**WO 2023/112508 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.12.2021 JP 2021204964**

(71) Applicant: SHIN-ETSU CHEMICAL CO., LTD.
Tokyo 1000005 (JP)

(72) Inventors:
• **TANAKA, Keita**
Annaka-shi, Gunma 379-0195 (JP)
• **MATSUMOTO, Takuto**
Annaka-shi, Gunma 379-0195 (JP)
• **IKARI, Masanori**
Annaka-shi, Gunma 379-0195 (JP)

(74) Representative: **HGF**
**HGF Limited**
**1 City Walk**
**Leeds LS11 9DX (GB)**

(54) **TRANSPARENT CERAMIC FOR MAGNETO-OPTICAL ELEMENT, AND MAGNETO-OPTICAL ELEMENT**

(57)    A transparent ceramic for a magneto-optical element of the present invention includes: a paramagnetic garnet-type composite oxide represented by Formula (1) and containing terbium, lutetium, and aluminum; and 100 to 1,000 mass ppm of Si as a sintering aid,

$$(Tb_{1-x}Lu_x)_3Al_5O_{12} ... \qquad (1)$$

wherein $0.05 \leq x \leq 0.45$.

A magneto-optical element of the present invention is an optical isolator that includes the transparent ceramic for a magneto-optical element as a Faraday rotator 110 and a polarizer 120 and an analyzer 130 before and after the Faraday rotator on an optical axis 102 and that is usable in a wavelength range of 0.9 to 1.1 $\mu$m.

FIGURE 1

**EP 4 450 476 A1**

**Description**

TECHNICAL FIELD

The present invention relates to a transparent ceramic for a magneto-optical element and to a magneto-optical element, and more specifically, relates to a transparent ceramic for a magneto-optical element that includes a paramagnetic garnet-type composite oxide containing terbium suitable for configuring a magneto-optical element such as an optical isolator, and a magneto-optical element using the transparent ceramic for a magneto-optical element.

BACKGROUND ART

In recent years, laser processing machines using fiber lasers have been remarkably popular since it has become possible to greatly increase output. In addition, in a laser light source incorporated in a laser processing machine, in a case in which light from outside is incident thereon, a phenomenon occurs in which a resonance state becomes unstable and an oscillation state is disturbed. In particular, in a case in which oscillating light is reflected by an optical system in the middle and returned to the light source, the oscillation state undergoes significant disturbance. In order to avoid this situation, an optical isolator is usually provided in front of the light source, for example.

The optical isolator includes a Faraday rotator, a polarizer disposed on a light incident side of the Faraday rotator, and an analyzer disposed on a light emitting side of the Faraday rotator. In addition, the Faraday rotator is used by applying a magnetic field parallel to the traveling direction of light. In this case, a polarization line segment of the light rotates only in a certain direction regardless of whether the light moves forward or backward in the Faraday rotator. Furthermore, the Faraday rotator is adjusted to have such a length that the polarization line segment of the light rotates by just 45 degrees. Here, when polarization planes of the polarizer and the analyzer are deviated by 45 degrees in the rotation direction of the light traveling forward, the polarization of the light traveling forward is transmitted as the polarization aligns with the position of the polarizer and the position of the analyzer. In addition, the polarization of the light traveling backward rotates reversely by 45 degrees with respect to the deviation angle direction of the polarization plane of the polarizer deviated by 45 degrees from the position of the analyzer. In that case, the polarization plane of the return light at the position of the polarizer deviates by 45 degrees - (-45 degrees) = 90 degrees with respect to the polarization plane of the polarizer, and the polarization of the light traveling backward cannot transmit the polarizer. In this way, the optical isolator functions to transmit and emit the light traveling forward, and to block the return light traveling backward.

As a material used as the Faraday rotator configuring the optical isolator, a TGG crystal ($Tb_3Ga_5O_{12}$) and a TSAG crystal ($Tb_{(3-x)}Sc_x)Sc_2Al_3O_{12}$) have been known in the related art (Patent Documents 1 and 2). The TGG crystal is currently widely mounted for a standard fiber laser device. However, since the TGG crystal has a high absorption coefficient, it is said that the maximum usable laser power is 80 W. In addition, the TSAG crystal has higher rotation angle performance and a lower absorption coefficient than the TGG crystal, and thus can handle a higher output laser than the TGG crystal. However, since expensive $Sc_2O_3$ is used in a large amount and the production stability is poor, the TSAG crystal has not become a widely used material at present.

In addition, a TAG ceramic (Patent Document 3), an YTAG ceramic (Non-Patent Document 1), and a KTF single crystal (Non-Patent Document 2) have been developed as other materials for the Faraday rotator. The TAG ($Tb_3Al_5O_{12}$) ceramic has a higher Verdet constant than a TGG single crystal and is said to be a suitable material for high power applications. The YTAG ceramic in which a part of the terbium of a TAG ceramic is replaced with yttrium has a lower Verdet constant than the TAG ceramic, but has a lower absorption coefficient than the TAG ceramic. Therefore, the YTAG ceramic can achieve high power ranges that have not been achieved with the TAG ceramic. The final KTF ($KTb_3F_{10}$) single crystal has an absorption coefficient that is much lower than those of other materials, and is said to be capable of handling up to the highest power among the Faraday rotators that are known so far. However, these three types of Faraday rotators have a problem in that the manufacturing stability is poor. In addition, the laser damage threshold for the KTF single crystal is low, and thus damage may be caused by a short pulse laser.

We have developed, as new magneto-optical materials, C-rare earth-type $(Tb, Y)_2O_3$ (Patent Document 4) and garnet-type $(Tb, Y, Sc)_3(Al, Sc)_5O_{12}$ (Patent Document 5). The former C-rare earth-type Faraday rotator has a high Verdet constant, and its absorption coefficient is also high. Therefore, there is a limit to the use for high power applications. In addition, the latter garnet type has a Verdet constant that is 0.9 to 1.3 times that of a TGG single crystal, and its absorption coefficient is equal to or less than that of the TGG single crystal. Therefore, the garnet type is considered to be optimal for high power applications. Furthermore, by adding a small amount of Sc, the garnet type has improved manufacturing stability as compared with YTAG.

However, although $(Tb, Y, Sc)_3(Al, Sc)_5O_{12}$ has a low absorption coefficient, its thermal conductivity is also low. Therefore, $(Tb, Y, Sc)_3(Al, Sc)_5O_{12}$ has been determined to not be suitable for high power applications of more than 200 W. When the Faraday rotator is irradiated with powerful laser light, a temperature distribution occurs in the Faraday rotator, and a thermal lens effect occurs. The thermal lens effect depends on the absorption coefficient and the thermal conductivity. The lower the absorption coefficient, the better, and the higher the thermal conductivity, the better. A material with low absorption similar to YTAG and a high thermal conductivity is desired, but no such material has yet been found.

The thermal conductivity is a material-specific value and is influenced by the crystal structure, composition, defects, grain boundary, and the like. In a transparent ceramic, grain boundaries are as thin as 1 nm or less, and thus, the influence of the thermal conductivity by the grain boundaries is small, and in a transparent ceramic without coloring or the like, it is conceivable that very few defects are present, and actually, a thermal conductivity equivalent to that of a single crystal is obtained at room temperature. Therefore, the crystal structure or composition determines the thermal conductivity.

Non-Patent Documents 3 and 4 show examples of the investigation on the influence of the composition on the thermal conductivity. According to these Non-Patent Documents, it is known that, for example, in a case in which yttrium aluminum garnet is doped with any other rare earth element, thermal conductivity rapidly decreases. From the above description, it is known that, in order to increase the thermal conductivity, a single composition is much more preferable, and there is a concern that the thermal conductivity may decrease if a mixture is used.

Non-Patent Document 5 describes a formula related to a change in thermal conductivity when a mixture is used. According to this formula, it is found that the thermal conductivity of the mixture is influenced by the respective thermal conductivities, the composition ratio, and differences in atomic weight between the constituent atoms. In the examples so far, since the rare earth element is substituted with yttrium, there is an atomic weight difference of about 70 to 80. Therefore, it is conceivable that the thermal conductivity rapidly decreases.

In addition, if the thermal conductivity is influenced by the atomic weight difference, it is conceivable that the smaller the atomic weight difference, the smaller the decrease in thermal conductivity. Non-Patent Document 5 shows the thermal conductivity when ytterbium is added to lutetium aluminum garnet. Since the difference in atomic weight between lutetium and ytterbium is as small as 2, it is found that the decrease in thermal conductivity is suppressed to a minimum. Therefore, it is conceivable that it is effective to change Y to Lu in order to increase the thermal conductivity of $(Tb, Y, Sc)_3(Al, Sc)_5O_{12}$.

Non-Patent Document 6 shows a Verdet constant and a thermal conductivity of a $(Tb_{0.72}Lu_{0.28})_3Al_5O_{12}$ single crystal. The Verdet constant is shown to be slightly lower than that of a TGG single crystal, and the thermal conductivity is shown to be 1.4 times that of the TGG single crystal. In order to increase the Verdet constant, it is necessary to increase the proportion of Tb. However, it has been known that it is difficult to produce a composition other than the above composition in a case of a single crystal (Non-Patent Document 7). Accordingly, a LuTAG-based Faraday rotator of which the Verdet constant and the thermal conductivity are equal to or greater than those of the TGG single crystal, respectively, has so far not been demonstrated.

Patent Document 6 shows $(Tb, Lu, Sc)_3(Al, Sc)_5O_{12}$. Sc has a greater atomic weight difference than Tb and Lu, leading to a large decrease in thermal conductivity. In Patent Document 6, the amount of Sc added is as large as at least about 0.10 wt% (in terms of metal Sc), and there is a concern that the thermal conductivity may decrease. Therefore, even with the composition of Patent Document 6, the maximum power usable is 150 W, and a further increase of power is essential.

REFERENCE DOCUMENT LIST

PATENT DOCUMENTS

Patent Document 1:    JP 2011-213552 A
Patent Document 2:    JP 2002-293693 A
Patent Document 3:    JP 6438588 B
Patent Document 4:    JP 5397271 B
Patent Document 5:    JP 6879264 B
Patent Document 6:    JP 6881390 B

NON-PATENT DOCUMENTS

Non-Patent Document 1: "Fabrication and Properties of (TbxY1-x)3Al5O12 Transparent Ceramics by Hot Isostatic pressing", Optical Materials, 72, 58-62 (2017)
Non-Patent Document 2: "Promising Materials for High Power Laser Isolator", Laser Tech Journal, Vol. 13, Issue 3, 18-21, (2016)

Non-Patent Document 3: "Effects of rare-earth doping on thermal conductivity in Y3Al5O12 crystals", Optical Materials, Vol. 31, Issue 5, 720-724 (2009)
Non-Patent Document 4: "Crystal growth and properties of (Lu, Y)3Al5O12", Journal of Crystal Growth, Vol 260, Issue 2, 159-165 (2004)
Non-Patent Document 5: "Thermal and laser properties of Yb: LuAG for kW thin disk lasers", Optical Express, Vol. 18, Issue 20, 20712-20722 (2010)
Non-Patent Document 6: "Magneto-optical property of terbium-lutetium-aluminum garnet crystals", Optical Materials, 66, 207-210 (2017)

## SUMMARY OF THE INVENTION

### PROBLEM TO BE SOLVED BY THE INVENTION

The present invention has been made in view of the above circumstances, and an object of the present invention is to provide a transparent ceramic for a magneto-optical element that includes a paramagnetic garnet-type composite oxide containing terbium and lutetium and can be mounted for a high power laser of 200 W or more, and a magneto-optical element.

### MEANS FOR SOLVING THE PROBLEM

In order to achieve the above object, an aspect of the present invention provides a transparent ceramic for a magneto-optical element including: a paramagnetic garnet-type composite oxide represented by Formula (1) and containing terbium, lutetium, and aluminum; and 100 to 1,000 mass ppm of Si as a sintering aid,

$$(Tb_{1-x}Lu_x)_3Al_5O_{12} ... \qquad (1)$$

in the formula, $0.05 \leq x \leq 0.45$ is satisfied.

The transparent ceramic for a magneto-optical element may further include 1,000 mass ppm or less of Sc as a sintering aid.

In the transparent ceramic for a magneto-optical element, a thermal conductivity at room temperature is preferably 4.2 W/(m·K) or more.

In the transparent ceramic for a magneto-optical element, an extinction ratio is preferably 35 dB or more.

In the transparent ceramic for a magneto-optical element, a loss coefficient at 1,064 nm is preferably 0.002 $cm^{-1}$ or less.

In the transparent ceramic for a magneto-optical element, a crystal grain diameter of the ceramic is 1 $\mu$m or more and 40 $\mu$m or less.

In the transparent ceramic for a magneto-optical element, an extinction ratio is preferably 35 dB or more when a laser having a wavelength of 1,064 nm and an output of 200 W is applied.

In the transparent ceramic for a magneto-optical element, a Verdet constant is preferably 30 Rad/(T·m) or more.

In addition, another aspect of the present invention provides a magneto-optical element that is configured using the transparent ceramic for a magneto-optical element.

The magneto-optical element may be an optical isolator that includes the transparent ceramic for a magneto-optical element as a Faraday rotator and polarizing materials before and after the Faraday rotator on an optical axis and that is usable in a wavelength range of 0.9 $\mu$m to 1.1 $\mu$m.

### EFFECTS OF THE INVENTION

According to the present invention, it is possible to provide a truly practical transparent ceramic for a magneto-optical element that has a higher thermal conductivity compared to Faraday rotators of the related art and also has the highest absorption coefficient due to the inclusion of the paramagnetic garnet-type composite oxide and the sintering aid described above, and thus has an extinction ratio of 35 dB or more even under irradiation with laser light of 200 W or more, that is, is applicable for high power laser applications, and a magneto-optical element using the transparent ceramic for a magneto-optical element.

### BRIEF DESCRIPTION OF THE DRAWING

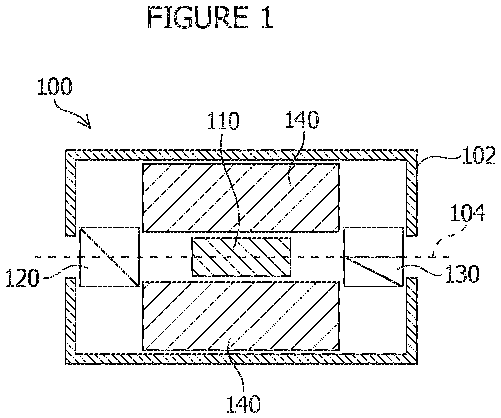

FIG. 1 is a schematic cross-sectional view illustrating an example of a configuration of an optical isolator using a transparent ceramic for a magneto-optical element according to the present invention as a Faraday rotator.

MODE FOR CARRYING OUT THE INVENTION

Transparent Ceramic for Magneto-Optical Element

First, an embodiment of a transparent ceramic for a magneto-optical element according to the present invention will be described. The transparent ceramic for a magneto-optical element includes a paramagnetic garnet composite oxide represented by Formula (1) and, as sintering aids, 100 to 1,000 mass ppm of Si and 1,000 mass ppm or less of Sc,

$$(Tb_{1-x}Lu_x)_3Al_5O_{12} \dots \qquad (1)$$

in the formula, $0.05 \le x \le 0.45$ is satisfied.

In Formula (1), terbium (Tb) is a material having the highest Verdet constant among paramagnetic elements excluding iron (Fe). In particular, in a case in which terbium is contained in an oxide having a garnet structure, terbium is completely transparent at a wavelength of 1,064 nm, and is thus the most suitable element to be used for an optical isolator in the above wavelength region.

Since lutetium (Lu) forms a garnet phase more stably than a perovskite phase when combining with aluminum and forming a composite oxide, the lutetium is an element that can be preferably used in the present invention. In addition, the lutetium has no characteristic absorption (f-f transition) in visible to near-infrared regions as compared with other rare earth elements, and has a small atomic weight difference of 16 with terbium. Therefore, the lutetium is an optimal element to add to produce a Faraday rotator having a high thermal conductivity.

At the B site of Formula (1), aluminum (Al) is a material having the smallest ionic radius among trivalent ions that can be stably present in the oxide having a garnet structure, and is an element that can make the lattice constant of a Tb-containing paramagnetic garnet-type oxide the smallest. It is preferable that it be possible to reduce the lattice constant of the garnet structure without changing the content of Tb, since the Verdet constant per unit length can be increased. Furthermore, since aluminum is a light metal, its diamagnetism is weaker than that of gallium, and thus, aluminum is expected to have an effect of relatively increasing the magnetic flux density generated inside the Faraday rotator, which also makes it possible to increase the Verdet constant per unit length. Therefore, aluminum is preferably used. The Verdet constant of an actual TAG ceramic is improved to 1.25 to 1.5 times that of a TGG. Therefore, even in a case in which the relative concentration of terbium is lowered by substituting some terbium ions with lutetium ions, the Verdet constant per unit length can be kept at the same level as, or higher than, or slightly lower than, that of the TGG, and thus aluminum is a suitable constituent element in the present invention.

In Formula (1), the range of x is preferably $0.05 \le x \le 0.45$, and more preferably $0.1 \le x \le 0.4$. In a case in which x is less than 0.05, the effect of substituting a part of terbium with lutetium cannot be obtained, and thus, the same conditions as those for producing a substantial TAG are provided. Accordingly, since it is difficult to stably manufacture a high quality ceramic sintered body with low scattering and low absorption, it is not preferable that x be less than 0.05. Furthermore, it is not preferable that x be more than 0.45 since the Verdet constant at a wavelength of 1,064 nm is less than 30 rad/(T·m). Furthermore, it is not preferable that the relative concentration of terbium be excessively low since the total length necessary for the rotation of the laser light having a wavelength of 1,064 nm by 45 degrees is increased and is longer than 25 mm, which is longer than that of a TGG single crystal.

The transparent ceramic for a magneto-optical element of the present invention includes a composite oxide represented by Formula (1) as a main component. Furthermore, as an accessory component, Si acting as a sintering aid is added in a range of 100 to 1,000 mass ppm. In a case in which Si is added in a predetermined amount as the sintering aid, the precipitation of perovskite type heterophases is suppressed, and thus, the transparent ceramic for a magneto-optical element can ensure transparency. Furthermore, the Si, added in a predetermined amount, undergoes vitrification during sintering at 1,400°C or higher and produces a liquid phase sintering effect, thereby being capable of promoting densification of a garnet-type ceramic sintered body. However, in a case in which more than 1,000 mass ppm of Si is added, the extinction ratio is less than 35 dB when 200 W laser beams having a wavelength of 1,064 nm are applied to the transparent ceramic for a magneto-optical element with a length (optical path length) of 20 mm, and thus, it is necessary to set the amount of Si to be added to 1,000 mass ppm or less.

Moreover, Si as a sintering aid can be added, for example, as a Si-based inorganic compound such as $SiO_2$ or a Si-based polymer compound such as tetraethoxysilane (TEOS). In that case, the amount to be added is preferably adjusted to 100 to 1,000 mass ppm in terms of metal Si. The lower limit of the amount of Si to be added is preferably 200 mass ppm or more, and more preferably 500 ppm or more. The upper limit of the amount of Si to be added is preferably 800 mass ppm or less.

In addition, 1,000 mass ppm or less of Sc may be added in addition to Si as a sintering aid. In a case in which SC is added, similarly to Si, the precipitation of perovskite type heterophases is suppressed, and thus, the transparency of the transparent ceramic for a magneto-optical element can be improved. In addition, since Sc is an element that can form a solid solution at both the A site and the B site of a garnet-type structure, the greater the amount to be added, the easier the manufacturing of the transparent ceramics. However, Sc has an atomic weight of 44.96, and has a large atomic weight difference as compared with Tb and Lu as main components individually. Therefore, the addition of a large amount leads to a deterioration of the thermal conductivity. Therefore, it is not preferable that Sc be added in an amount greater than 1,000 mass ppm.

Sc can be added as, for example, a Sc-based inorganic compound such as $Sc_2O_3$. The lower limit of the amount of Sc to be added is preferably 100 mass ppm or more. The upper limit of the amount of Sc to be added is preferably 800 ppm or less. In addition, the total amount of Si and Sc is preferably 1,000 mass ppm or less.

In the present specification, the term "amount to be added" indicates an amount of a sintering aid to be intentionally added. Therefore, a case in which the amount to be added is 0 mass ppm indicates that there is no intentional addition of the sintering aid, and a case in which the corresponding element is contained as an impurity in the raw material powder is excluded.

In addition, the expression "contained as a main component" means that the transparent ceramic for a magneto-optical element contains 90 mass% or more of the composite oxide represented by Formula (1). The content of the composite oxide represented by Formula (1) is preferably 99 mass% or more, more preferably 99.9 mass% or more, and even more preferably 99.99 mass% or more.

The transparent ceramic for a magneto-optical element of the present invention includes the above-described main components and accessory components, but may further contain other elements. Examples of other elements include rare earth elements such as yttrium (Y) and cerium (Ce), and typical examples of various impurities include sodium (Na), calcium (Ca), magnesium (Mg), phosphorus (P), tungsten (Ta), and molybdenum (Mo).

The content of other elements is preferably 10 parts by mass or less, more preferably 0.1 parts by mass or less, and even more preferably 0.001 parts by mass or less when the total amount of Tb is 100 parts by mass.

The transparent ceramic for a magneto-optical element of the present invention has a colorless and transparent appearance, and has a loss coefficient of 0.002 cm$^{-1}$ or less at a wavelength of 1,064 nm with an optical path length of 20 mm. The lower limit of the number of losses is not particularly limited, but may be, for example, 0.0001 cm$^{-1}$ or more. In the present invention, the term "loss coefficient" is a coefficient indicating the performance of the transparent ceramic and is represented by the following expression,

$$\text{Loss Coefficient [cm}^{-1}] = 10 \times \log (I/I_0)/(\text{Sample Length [cm]})$$

in the expression, I represents a transmitted light intensity (the intensity of light linearly transmitted through a sample with a length of 20 mm), and $I_0$ represents an incident light intensity.

The thermal conductivity of the paramagnetic garnet-type ceramic of the present invention is 4.2 W/(m·K) or more. The method of measuring the thermal conductivity is roughly classified into a steady state method and a non-steady state method. Examples of the steady state method include a heat flow meter method, and examples of the unsteady method include a laser flash method, a cyclic heating method, and a heat ray method. In the present invention, any measurement method may be used for measurement. Among the methods, the laser flash method is the most preferable measurement method from the viewpoint that the sample size may be smaller than those in other measurement methods and completely transparent ceramics are easily made. The upper limit of the thermal conductivity is not particularly limited, but may be, for example, 8.0 W/(m·K) or less.

In the transparent ceramic for a magneto-optical element of the present invention, the Verdet constant at a wavelength of 1,064 nm is preferably 30 rad/(T·m) or more, and more preferably 36 rad/(T·m) or more. It is particularly preferable that the Verdet constant be 36 rad/(T·m) or more since the replacement with a TGG single crystal as an existing material can be easily performed without a change of component design. The upper limit of the Verdet constant is not particularly limited, but may be, for example, 60 rad/(T·m) or less.

The transparent ceramic for a magneto-optical element of the present invention has an extinction ratio of 35 dB or more as a single ceramic element. Within the garnet composition range of the present invention, material defects such as strain and point defects are dramatically reduced, and thus, the extinction ratio of the single material element is stably controlled to 35 dB or more. The upper limit of the extinction ratio is not particularly limited, but may be, for example, 50 dB or less.

In addition, in the transparent ceramic for a magneto-optical element of the present invention, the extinction ratio is 35 dB or more in a case in which laser light having a wavelength of 1,064 nm is incident with an optical path length of 20 mm at an incident power of 200 W. When a high power laser is applied, heat generation is observed in response to the absorption amount of the transparent ceramic, and due to the heat generation, a temperature distribution is generated in response to the thermal conductivity. As a result, thermal birefringence occurs. In this case, even in a case in which the extinction ratio is 35 dB or more at low power (for example, 1 W), the extinction ratio is reduced by the high power irradiation. It is not preferable that the extinction ratio at high power be less than 35 dB since there is a high probability of damage to the laser light source. The upper limit of the extinction ratio at high power is not particularly limited, but may be, for example, 50 dB or less.

The change of the position of the focal point of emitted beams and the change of the diameter of emitted beams are influenced by the same heat generation and thermal conductivity as in the case of the extinction ratio during the high power irradiation. These are called thermal lens effect, which is a phenomenon that occurs since a refractive index distribution is generated by a temperature distribution due to the heat generation. In the change of the position of the focal point of emitted beams, a rate of change between the position of the focal point of beams when no sample is placed and the position of the focal point of beams when the beams pass through the sample is preferably less than 10%. In the change of the diameter of emitted beams, a rate of change between an initial beam diameter and a beam diameter when the beams pass through the sample is preferably less than 10%. In the present invention, in a high power irradiation test, it is possible to make a judgement based on any of the change of the extinction ratio, the change of the position of the focal point, and the change of the diameter of beams in the determination of acceptance.

Method of Manufacturing Transparent Ceramic for Magneto-Optical Element

Next, an embodiment of a method of manufacturing the transparent ceramic for a magneto-optical element according to the present invention will be described. In the present embodiment, first, a raw material powder is press-formed into a predetermined shape, and is then degreased. Then, sintering is performed thereon to produce a densified sintered body having a relative density of at least 95%. As a subsequent process, a hot isostatic pressing (HIP) treatment is preferably performed. In a case in which the HIP treatment is performed as is, the transparent ceramic for a magneto-optical element is reduced and a slight oxygen deficiency is caused. Therefore, it is preferable that a slight oxidizing HIP treatment be performed, or after the HIP treatment, an annealing treatment be performed in an oxidizing atmosphere to recover the oxygen deficiency. Accordingly, it is possible to obtain a transparent ceramic for a magneto-optical element that is transparent without defect absorption and includes a paramagnetic garnet-type composite oxide. Hereinafter, raw materials and processes will be described.

1. Raw Materials

As a raw material used in the present embodiment, a metal powder including terbium, lutetium, scandium, and aluminum, an aqueous solution of nitric acid, sulfuric acid, uric acid, and the like, or an oxide powder of the above-described elements can be suitably used.

The preparation of the oxide powder for a transparent ceramic is roughly classified into two types, i.e., a breakdown type and a build-up type, but is not particularly limited as long as transparency can be realized. The build-up type is a method of adjusting an oxide powder for a transparent ceramic by pulverizing various powders, which has an advantage in productivity, but also has a problem in uniformity of the composition. In addition, the build-up type is a method of obtaining a powder by nucleation and grain growth from a solution of various elements, which has a great advantage in uniformity of the composition, but is inferior in productivity and reproducibility. In the present invention, the preparation of the oxide powder for a transparent ceramic is not particularly limited as long as high transparency can be realized.

In the breakdown type, it is most preferable that various oxide powders and sintering aids be weighed and pulverized by a wet method or a dry method. The purity of each of the various oxide powders is preferably 99.9% or more, and more preferably 99.99% or more. In addition, the primary grain diameter of each of the various powders is preferably 0.05 to 100 $\mu$m. It is not preferable that the primary grain diameter be less than 0.05 $\mu$m, since it is difficult to control the uniformity of the ceramic due to high aggregability of the grains and densification rapidly occurs in the sintering process, which makes it difficult to control the emission of bubbles. In addition, in a case in which the diameter is larger than 100 $\mu$m, it is not possible to pulverize even fine grains by wet pulverization or dry pulverization, and thus, it is not appropriate for the diameter to be greater than 100 $\mu$m. The pulverization may be performed either in a wet or dry manner, and any of a ball mill treatment, a bead mill treatment, a jet mill treatment, and a homogenizer treatment can be suitably used. The pulverization is preferably performed until the center value (D50) of the primary grain size distribution is less than 1 $\mu$m.

In the build-up type, a method including: synthesizing a powder from a solution containing various elements (that may contain not only main components, but also sintering aids) and baking at 1,300°C or less is preferable. Examples of the precursors of the various elements include chlorides, nitrates, carbonates, and sulfates, and the precursors are not particularly limited. Furthermore, examples of the powder synthesis method include a coprecipitation method, a polymerized complex method, and a homogeneous precipitation method, and the powder synthesis method is not particularly limited as long as a highly transparent ceramic can be manufactured. In any synthesis method, the primary grain diameter is preferably 0.05 $\mu$m or more, and the shape of the primary grains is not particularly limited. Depending on properties of the obtained powder, the pulverization may be performed by a wet method or a dry method after baking, and as in the breakdown type, the pulverization method is not particularly limited.

Moreover, organic additives such as dispersants, binding agents, plasticizers, and lubricants may be added to improve the subsequent manufacturing yield stability and quality. In that case, a method in which the additives are wet-pulverized and added in a slurry is preferable since the method is the most stable. The amount to be added is not particularly limited as long as target characteristics can be obtained.

2. Forming

In the manufacturing method of the present embodiment, a usual press forming process can be suitably used. That is, it is possible to suitably use a very general pressing process in which a mold is filled and pressurization is performed in a certain direction, or a cold isostatic pressing (CIP) process or a warm isostatic pressing (WIP) process in which after airtight storing in a deformable waterproof container, pressurization is performed with hydrostatic pressure. The pressure to be applied may be appropriately adjusted while confirming the relative density of a formed body to be obtained, and it is not particularly limited. Alternatively, it is also possible to suitably use a hot press process, a discharge plasma sintering process, a microwave heating process, or the like in which not only a forming process, but also sintering are performed at a time during forming. Furthermore, it is also possible to produce a formed body by a slip casting method instead of the press forming method. Forming methods such as pressure slip casting, centrifugal slip casting, and extrusion forming can also be adopted by optimizing combinations of the shape and size of an oxide powder as a starting material and various organic additives.

3. Degreasing

In the manufacturing method of the present embodiment, a usual degreasing process can be suitably used. That is, a temperature raising and degreasing process can be performed by a heating furnace. In addition, in this case, the type of atmospheric gas is also not particularly limited, and air, oxygen, hydrogen, or the like can be suitably used. The degreasing temperature is also preferably 270°C or higher and 1,000°C or lower. In a case in which the temperature is lower than 270°C, it is difficult to completely remove the organic additives. In addition, in a case in which the temperature is higher than 1,000°C, densification proceeds before the sintering process, and thus, it is difficult to obtain a transparent sintered body with low scattering.

4. Sintering

In the manufacturing method of the present embodiment, a usual sintering process can be suitably used. That is, a heating and sintering process such as a resistance heating method or an induction heating method can be suitably used. In this case, the atmosphere is not particularly limited, and various atmospheres such as inert gas, oxygen gas, hydrogen gas, and helium gas, or sintering under reduced pressure (in vacuum) can be adopted. However, it is most preferable that the sintering be performed in vacuum in which high transparency can be realized.

The sintering temperature in the sintering process of the present embodiment is preferably 1,400°C to 1,780°C, and is particularly preferably 1,450°C to 1,750°C. It is preferable that the sintering temperature be in the above range since densification is promoted while the precipitation of heterophases is suppressed.

A sintering holding time of about several hours is sufficient for the sintering process of the present embodiment, but the sintered body is required to be densified to reach a relative density of 93% or more. In a case in which the relative density is less than 93%, a transparent body cannot be obtained in the subsequent HIP process, and this is not suitable. It is necessary to control the sintering holding time so that the relative density of the sintered body is 93% or more.

The crystal grain diameter in the sintering process is preferably 1 to 40 $\mu$m, and more preferably 5 to 35 $\mu$m. In a case in which the crystal grain diameter is less than 1 $\mu$m, the degree of transparency deteriorates due to the minute compositional deviation between crystal grains, and this is not suitable. It is also not preferable that the crystal grain diameter be 40 $\mu$m or more since there is a risk of occurrence of desulfurization in the polishing that is a subsequent process. The sintering temperature and the sintering holding time are preferably set so that the crystal grain diameter is in the range.

Moreover, the average grain diameter of sintered grains (average sintered grain diameter) is obtained by measuring grain diameters of sintered grains of a target sintered body with a metal microscope, and a specific description of obtaining the average grain diameter is as follows.

That is, as for a pre-sintered body, a reflection image of a sintered body surface is captured by using a metal microscope with the use of a 50x objective lens with a reflection mode. Specifically, an image of an entire optically effective area of the target sintered body is captured in consideration of the effective image size of the object lens, and the captured image is subjected to analysis processing. In this case, first, a diagonal line is drawn on each captured image, the total number of sintered grains crossed by the diagonal line is counted, and then the value obtained by dividing the length of the diagonal line by the total number counted is defined as the average grain diameter of the sintered grains in the image. The average grain diameters in the captured images read in the analysis processing are added together, and then divided by the number of captured images. The resulting number is defined as the average sintered grain diameter of the target sintered body.

## 5. Hot Isostatic Pressing (HIP)

In the manufacturing method of the present embodiment, a process of performing a hot isostatic pressing (HIP) treatment can be additionally provided after the sintering process.

In this case, as the type of a pressing gas medium, an inert gas such as argon or nitrogen or $Ar-O_2$ can be suitably used. The pressure to be applied by the pressing gas medium is preferably 50 to 300 MPa, and more preferably 100 to 300 MPa. In a case in which the pressure is less than 50 MPa, the transparency improvement effect may not be obtained. In addition, in a case in which the pressure is more than 300 MPa, no further improvement can be obtained in transparency even when the pressure is increased. The pressure to be applied is preferably 196 MPa or less, which can be conveniently processed by a commercially available HIP device.

In addition, the treatment temperature (predetermined holding temperature) in that case is set in a range of 1,000 to 1,780°C, and preferably 1,100°C to 1,730°C. It is not preferable that the heat treatment temperature be higher than 1,780°C since the risk of oxygen deficiency is increased. In addition, in a case in which the heat treatment temperature is lower than 1,000°C, the transparency improvement effect for the sintered body is hardly obtained. The holding time at the heat treatment temperature is not particularly limited, but it is not preferable that the holding be performed for too long a time since the risk of oxygen deficiency is increased. Typically, the holding time is preferably set in a range of 1 to 3 hours.

The heater material, the heat insulating material, and the treatment container for the HIP treatment are not particularly limited. However, graphite, molybdenum (Mo), tungsten (W), and platinum (Pt) can be suitably used, and yttrium oxide and gadolinium oxide can also be suitably used as the treatment container. In particular, it is preferable that the treatment temperature be 1,500°C or lower, since platinum (Pt) can be used as the heater material, the heat insulating material, and the treatment container, and $Ar-O_2$ can be used as the pressing gas medium, which can prevent the occurrence of oxygen deficiency during the HIP treatment.

In a case in which the treatment temperature is 1,500°C or higher, graphite is preferable as the heater material and the heat insulating material. In this case, it is preferable that any of graphite, molybdenum (Mo), and tungsten (W) be selected as the treatment container, either yttrium oxide or gadolinium oxide be selected as a double container inside the treatment container, and then the container be filled with an oxygen release material since the amount of oxygen deficiency occurring during the HIP treatment can be suppressed as much as possible.

Moreover, after the present HIP treatment, the sintering treatment may be performed again, and then the HIP treatment may be further performed in order to further reduce the scattering. There is no specific limitation on the number of times the sintering treatment and the HIP treatment are performed, and the treatments may be repeated until low scattering is achieved.

## 6. Annealing Treatment

In the manufacturing method of the present embodiment, oxygen deficiency may occur in an obtained transparent ceramic sintered body after the HIP treatment is finished, and the appearance may be slightly light gray. In that case, an annealing treatment (oxygen deficiency recovery treatment) is preferably performed under an oxygen atmosphere or an air atmosphere at a temperature equal to or lower than the HIP treatment temperature, typically 1,000°C to 1,500°C. In this case, the holding time is not particularly limited. However, the holding time may be sufficiently long to recover from the oxygen deficiency, and is preferably 10 hours or longer, and more preferably 20 hours or longer.

Through the oxygen annealing treatment, even transparent ceramic sintered bodies that have obtained a slightly light gray appearance in the HIP treatment process can all be made into transparent ceramic bodies for a magneto-optical element that are transparent without defect absorption.

## 7. Optical Polishing

In the manufacturing method of the present embodiment, for the transparent ceramic for a magneto-optical element that have undergone the above series of manufacturing processes, both end surfaces on an axis that is optically used are preferably optically polished. In this case, the optical surface accuracy is preferably $\lambda/2$ or less, and particularly preferably $\lambda/8$ or less at a measurement wavelength $\lambda$ of 633 nm. It is also possible to further reduce the optical loss by appropriately forming an anti-reflection film on the optically polished surface.

In this way, it is possible to provide a transparent ceramic for a magneto-optical element that includes a paramagnetic garnet-type composite oxide containing terbium and lutetium as a main component, and has a thermal conductivity of 4.2 W/mK or more at room temperature. In addition, it is possible to provide a transparent ceramic for a magneto-optical element that has a Verdet constant of 30 rad/(T·m) or more at a wavelength of 1,064 nm and has an extinction ratio of 35 dB or more in a case in which laser light having a wavelength of 1,064 nm is incident with an optical path length of 20 mm and a beam diameter of 1.6 mm at an incident power of 200 W.

Magneto-Optical Element

Furthermore, an embodiment of a magneto-optical element according to the present invention will be described. The magneto-optical element according to the present invention is configured using the above-described transparent ceramic for a magneto-optical element. The above-described transparent ceramic for a magneto-optical element can be used as a magneto-optical material, and specifically, it is preferable to configure and to use a magneto-optical element by applying, to the transparent ceramic for a magneto-optical element, a magnetic field parallel to an optical axis of the transparent ceramic for a magneto-optical element, and to set a polarizer and an analyzer so that optical axes thereof deviate from each other by 45 degrees. In particular, the transparent ceramic for a magneto-optical element according to the present invention is suitably used as a Faraday rotator of an optical isolator having a wavelength of 0.9 to 1.1 μm.
FIG. 1 is a cross-sectional view schematically illustrating an example of an optical isolator that is a magneto-optical element including, as an optical element, a Faraday rotator formed of the transparent ceramic for a magneto-optical element of the present invention. As illustrated in FIG. 1, an optical isolator 100 includes a Faraday rotator 110 formed of the above-described transparent ceramic for a magneto-optical element, and a polarizer 120 and an analyzer 130 formed of a polarizing material in a chassis 102. These are disposed in the order of the polarizer 120, the Faraday rotator 110, and the analyzer 130 along an optical axis 104 of the Faraday rotator. A polarizing vibration surface of the polarizer 120 and a polarizing vibration surface of the analyzer 130 are disposed so that a relative angle is 45°. In addition, the optical isolator 100 includes a magnet 140 for applying a magnetic field to the Faraday rotator 110 around the Faraday rotator 110 in the chassis 102.
The optical isolator 100 can be suitably used for an industrial fiber laser device (not illustrated). The optical isolator can prevent the laser light emitted from a laser light source from being reflected back to the light source and making the oscillation unstable.

EXAMPLES

The present invention will be described in detail below with reference to examples.

Examples 1 to 4 and Comparative Examples 1 to 4

Manufacturing of Transparent Ceramic

Each of a terbium oxide powder ($Tb_4O_7$, manufactured by Shin-Etsu Chemical Co., Ltd.), a lutetium oxide powder ($Lu_2O_3$, manufactured by Shin-Etsu Chemical Co., Ltd.), an aluminum oxide powder ($Al_2O_3$, manufactured by Taimei Chemicals Co., Ltd., grade TM-DAR), tetraethoxysilane ($Si(OC_2H_5)_4$, manufactured by Kishida Chemical Co., Ltd., referred to as TEOS hereinbelow) as a sintering aid, and a scandium oxide powder ($Sc_2O_3$, manufactured by Shin-Etsu Chemical Co., Ltd.), having a purity of 99.999% or more, was weighed in a predetermined amount and subjected to a wet ball mill treatment using ethanol (manufactured by Kanto Chemical Co., Inc.) as a dispersion medium. 2-mm alumina balls (manufactured by Nikkato Corporation) were used as ball mill media. To the slurry obtained by the ball mill treatment, 1 wt% of polyvinyl alcohol (manufactured by Kanto Chemical Co., Inc.) was added as a binding agent, and granulation was performed by spray drying. The obtained granules were subjected to uniaxial press forming and a CIP treatment to have a predetermined shape and were degreased in air in a muffle furnace at 500°C. Next, a vacuum sintering treatment ($10^{-3}$ Pa, 1,600°C) and a subsequent HIP treatment (198 MPa, 1,600°C) were performed, and atmospheric annealing was then performed at 1,450°C for 10 hours. The obtained transparent body was polished and processed to achieve ø5 mm × L20 mm and an optical surface accuracy of k/8. Comparative Examples 1 to 4 were made transparent in the same manner, except that the lutetium oxide powder of the examples was not added or changed to an yttrium oxide powder ($Y_2O_3$, manufactured by Shin-Etsu Chemical Co., Ltd.).

Measurement of Loss Coefficient

The loss coefficient was measured with the intensity of light having a wavelength of 1,064 nm when the light was transmitted with a beam diameter of 1 mmø, by using an optical system manufactured using a light source manufactured by NKT Photonics, and a power meter and a Ge photodetector manufactured by Gentec, and was obtained based on the following expression.

$$\text{Loss Coefficient } [\text{cm}^{-1}] = 10 \times \log (I/I_0)/(\text{Sample Length } [\text{cm}])$$

(in the expression, I represents a transmitted light intensity (the intensity of light linearly transmitted through a sample with a length of 20 mm), and $I_0$ represents an incident light intensity)

Measurement of Thermal Conductivity

The thermal conductivity was measured in accordance with JIS R 1611-1997 (test methods of thermal diffusivity, specific heat, and thermal conductivity for fine ceramics by a laser flash method). A disk-shaped transparent ceramic sintered body having a diameter of 10 mm and a thickness of 2 mm was prepared, and one surface thereof was irradiated with a laser. The difference in temperature rise between the laser-irradiated surface and the surface opposite to the laser-irradiated surface was measured, and a thermal diffusivity $\alpha$ was determined by a half-time method. A density $\rho$ was measured by the Archimedes method, and a specific heat C was measured by differential scanning thermogravimetry. The thermal conductivity was determined by the product of the thermal diffusivity $\alpha$, the density $\rho$, and the specific heat C.

Method of Measuring Extinction Ratio

Regarding the extinction ratio, by using an optical system manufactured using a light source manufactured by NKT Photonics, a collimator lens, a polarizer, a work stage, an analyzer, and a power meter and a Ge photodetector manufactured by Gentec, an intensity $I_0'$ of light having a wavelength of 1,064 nm and transmitted through a sample with a large beam diameter set to 3 mmø when, in the above state, a polarizing surface of the analyzer and a polarizing surface of the polarizer were allowed to coincide with each other was measured, and a received light intensity $I'$ was measured again in a state in which the polarizing surface of the analyzer was rotated by 90 degrees to be orthogonal to the polarizing surface of the polarizer, to calculate the extinction ratio based on the following expression.

$$\text{Extinction Ratio (dB)} = -10 \times \log_{10} (I'/I_0')$$

Evaluation of Extinction Ratio During High Power Irradiation

The extinction ratio during high power irradiation was measured with reference to JIS C 5877-2: 2012. The measurement was performed using collimated CW laser light that was linearly polarized light having a wavelength of 1,064 nm, an emission power of 200 W, and a diameter of 1.6 mm. A sample, a PBS, and a power meter were disposed on the optical axis of the laser light. First, the PBS was disposed to be parallel to the polarization of the laser light and a transmitted light intensity $P_{//}$ was read. Next, the PBS was disposed to be perpendicular to the polarization and a transmitted light intensity $P_{\perp}$ was read. An extinction ratio (dB) at an incident intensity of 200 W was calculated using the following expression.

$$\text{Extinction Ratio (dB)} = -10 \times \log_{10} (P_{ms\perp}/P_{//})$$

Isolator Mounting

As illustrated in FIG. 1, each of the obtained ceramic samples was inserted into a center of a neodymium-iron-boron magnet having an outer diameter of 32 mm, an inner diameter of 6 mm, and a length of 40 mm, and polarizers were inserted into both ends of the magnet. Then, using a high power laser (beam diameter 1.6 mm) manufactured by IPG Photonics Japan, Ltd., high power laser beams having a wavelength of 1,064 nm were made incident from both end surfaces to determine a Faraday rotation angle $\theta$. The Faraday rotation angle $\theta$ was an angle indicating the maximum transmission when the polarizer on the emission side was rotated. A Verdet constant was calculated based on the following expression. As magnitude (H) of a magnetic field applied to the sample, a value calculated by simulation from the dimensions of the measurement system, a residual magnetic flux density (Br), and a holding force (Hc) was used,

$$\theta = V \times H \times L$$

in the expression, θ is the Faraday rotation angle (Rad), V is the Verdet constant (Rad/T·m), H is the magnitude (T) of the magnetic field, and L is the length of the Faraday rotator (0.020 m in this case).

Table 1

| | Composition | Si Amount (ppm) | Sc Amount (ppm) | Thermal Conductivity (W/mK) | Loss Coefficient ($cm^{-1}$) | Verdet Constant (Rad/Tm) | Extinction Ratio (dB) | Extinction Ratio During 200W irradiation (dB) |
|---|---|---|---|---|---|---|---|---|
| Example 1 | $(Tb_{0.95}Lu_{0.05})_3Al_5O_{12}$ | 200 | 800 | 5.2 | 0.0019 | 56 | 42 | 36 |
| Example 2 | $(Tb_{0.8}Lu_{0.2})_3Al_5O_{12}$ | 200 | 800 | 4.9 | 0.0015 | 45 | 44 | 37 |
| Example 3 | $(Tb_{0.7}Lu_{0.3})_3Al_5O_{12}$ | 200 | 800 | 4.4 | 0.0013 | 38 | 42 | 39 |
| Example 4 | $(Tb_{0.6}Lu_{0.4})_3Al_5O_{12}$ | 200 | 800 | 4.5 | 0.0011 | 31 | 43 | 40 |
| Comparative Example 1 | $Tb_3Al_5O_{12}$ | 200 | 800 | 6.0 | 0.0025 | 60 | 34 | 32 |
| Comparative Example 2 | $(Tb_{0.8}Y_{0.2})_3Al_5O_{12}$ | 200 | 800 | 3.9 | 0.0015 | 46 | 42 | 34 |
| Comparative Example 3 | $(Tb_{0.6}Y_{0.4})_3Al_5O_{12}$ | 200 | 800 | 4.0 | 0.0013 | 32 | 43 | 34 |
| Comparative Example 4 | $Tb_3Al_5O_{12}$ | 200 | 0 | 6.1 | 0.0031 | 60 | 32 | 32 |

Table 1 shows the results of the characteristic evaluation for various transparent ceramics. It is found that, at the A site, in a case in which the substitution with Lu is conducted, the thermal conductivity is 4.2 W/mK or more, and the loss coefficient decreases. As a result, the extinction ratio during 200 W irradiation was 35 dB or more. In addition, at the A site, in a case in which the substitution with Y is conducted, the loss coefficient is about the same, but the thermal conductivity significantly decreases. Therefore, the extinction ratio during 200 W irradiation is less than 35 dB. From these results, it has been found that the element for substitution at the A site is preferably Lu rather than Y, and using as a Faraday rotator for high power of more than 200 W is possible.

Examples 5 to 11 and Comparative Examples 5 to 8

Transparent ceramics were produced in the same manner as in Example 2, except that the amounts of TEOS and $Sc_2O_3$ to be added were changed. Table 2 shows the results. In a case in which the amount of Sc to be added was 1,000 mass ppm or less, no rapid decrease was shown in thermal conductivity, and the extinction ratio during 200 W irradiation was 35 dB or more. However, in a case in which more than 1,000 mass ppm of Sc was added, although the stability of transparency was improved, the thermal conductivity decreased and the extinction ratio during 200 W irradiation was less than 35 dB. Therefore, it has been found that the amount of Sc to be added is preferably 1,000 mass ppm or less. In a case in which the amount of Sc is reduced, it is difficult to achieve transparency, but the transparency can be achieved by adjusting the amount of Si. It was found that in a case in which the amount of Si is also in a range of 100 mass ppm to 1,000 mass ppm, there is no particular influence on the extinction ratio during high power irradiation, and in a case in which the amount of Si is 0 mass ppm, transparency is not achieved due to the generation of heterophases.

Table 2

| | Composition | Si Amount (ppm) | Sc Amount (ppm) | Thermal Conductivity (W/mK) | Loss Coefficient (cm$^{-1}$) | Verdet Constant (Rad/Tm) | Extinction Ratio (dB) | Extinction Ratio During 200W Irradiation (dB) |
|---|---|---|---|---|---|---|---|---|
| Example 5 | $(Tb_{0.8}Lu_{0.2})_3Al_5O_{12}$ | 200 | 500 | 4.7 | 0.0015 | 45 | 45 | 38 |
| Example 6 | $(Tb_{0.8}Lu_{0.2})_3Al_5O_{12}$ | 500 | 200 | 4.8 | 0.0015 | 45 | 45 | 40 |
| Example 7 | $(Tb_{0.8}Lu_{0.2})_3Al_5O_{12}$ | 700 | 100 | 4.6 | 0.0017 | 45 | 45 | 40 |
| Example 8 | $(Tb_{0.8}Lu_{0.2})_3Al_5O_{12}$ | 1000 | 0 | 4.6 | 0.0016 | 45 | 45 | 40 |
| Example 9 | $(Tb_{0.8}Lu_{0.2})_3Al_5O_{12}$ | 500 | 0 | 4.7 | 0.0017 | 45 | 42 | 40 |
| Example 10 | $(Tb_{0.8}Lu_{0.2})_3Al_5O_{12}$ | 200 | 0 | 4.8 | 0.0019 | 45 | 41 | 40 |
| Example 11 | $(Tb_{0.8}Lu_{0.2})_3Al_5O_{12}$ | 100 | 0 | 4.9 | 0.0019 | 45 | 39 | 37 |
| Comparative Example 5 | $(Tb_{0.8}Lu_{0.2})_3Al_5O_{12}$ | 1000 | 3000 | 4.1 | 0.0018 | 45 | 45 | 34 |
| Comparative Example 6 | $(Tb_{0.8}Lu_{0.2})_3Al_5O_{12}$ | 200 | 3000 | 4.1 | 0.0018 | 45 | 45 | 34 |
| Comparative Example 7 | $(Tb_{0.8}Lu_{0.2})_3Al_5O_{12}$ | 200 | 5000 | 3.9 | 0.0018 | 45 | 45 | 31 |
| Comparative Example 8 | $(Tb_{0.8}Lu_{0.2})_3Al_5O_{12}$ | 0 | 0 | 4.9 | Opaque | - | - | - |

Although the present invention has been described using the above embodiments, the present invention is not limited to the above embodiments. Changes such as other embodiments, additions, changes, and deletions may be made within the scope that can be conceived by those skilled in the art and also fall within the scope of the present invention as long as the actions and effects of the present invention are exhibited in any aspect.

REFERENCE SYMBOL LIST

100    Optical isolator
102    Chassis
104    Optical axis
110    Faraday rotator
120    Polarizer
130    Analyzer
140    Magnet

**Claims**

1. A transparent ceramic for a magneto-optical element comprising: a paramagnetic garnet-type composite oxide represented by Formula (1) and containing terbium, lutetium, and aluminum; and 100 to 1,000 mass ppm of Si as a sintering aid,

$$(Tb_{1-x}Lu_x)_3Al_5O_{12} \dots \qquad (1)$$

wherein $0.05 \leq x \leq 0.45$.

2. The transparent ceramic for a magneto-optical element according to claim 1, further comprising 1,000 mass ppm or less of Sc as a sintering aid.

3. The transparent ceramic for a magneto-optical element according to claim 1 or 2, wherein a thermal conductivity at room temperature is at least 4.2 W/(m K).

4. The transparent ceramic for a magneto-optical element according to any one of claims 1 to 3, wherein an extinction ratio is at least 35 dB.

5. The transparent ceramic for a magneto-optical element according to any one of claims 1 to 4, wherein a loss coefficient at 1,064 nm is 0.002 cm$^{-1}$ or less.

6. The transparent ceramic for a magneto-optical element according to any one of claims 1 to 5, wherein a crystal grain diameter of the ceramic is 1 to 40 $\mu$m.

7. The transparent ceramic for a magneto-optical element according to any one of claims 1 to 6, wherein an extinction ratio is at least 35 dB when a laser having a wavelength of 1,064 nm and an output of 200 W is applied.

8. The transparent ceramic for a magneto-optical element according to any one of claims 1 to 7, wherein a Verdet constant is at least 30 Rad/(T·m).

9. A magneto-optical element that is configured using the transparent ceramic for a magneto-optical element according to any one of claims 1 to 8.

10. The magneto-optical element according to claim 9, wherein the magneto-optical element is an optical isolator that includes the transparent ceramic for a magneto-optical element as a Faraday rotator and polarizing materials before and after the Faraday rotator on an optical axis and that is usable in a wavelength range of 0.9 to 1.1 $\mu$m.

# FIGURE 1

**EP 4 450 476 A1**

<table>
<tr><td colspan="2"><strong>INTERNATIONAL SEARCH REPORT</strong></td><td>International application No.<br><br><strong>PCT/JP2022/040203</strong></td></tr>
</table>

**A. CLASSIFICATION OF SUBJECT MATTER**

*C04B 35/44*(2006.01)i; *C04B 35/50*(2006.01)i; *G02F 1/09*(2006.01)i
FI: C04B35/44; C04B35/50; G02F1/09 501

According to International Patent Classification (IPC) or to both national classification and IPC

**B. FIELDS SEARCHED**

Minimum documentation searched (classification system followed by classification symbols)

C04B35/44; C04B35/50; G02F1/09

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2019-207340 A (SHINETSU CHEMICAL CO) 05 December 2019 (2019-12-05)<br>claims 1-12 | 1-10 |
| A | JP 2019-199387 A (SHINETSU CHEMICAL CO) 21 November 2019 (2019-11-21)<br>claims 1-8 | 1-10 |
| A | JP 2017-137223 A (NAT INST MATERIALS SCIENCE) 10 August 2017 (2017-08-10)<br>claims 1-17 | 1-10 |
| A | JP 6-324294 A (SHINETSU CHEMICAL CO) 25 November 1994 (1994-11-25)<br>paragraph [0022] | 1-10 |
| A | WO 2011/049102 A1 (FUJIKURA LTD) 28 April 2011 (2011-04-28)<br>claims 1-13 | 1-10 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

18

**INTERNATIONAL SEARCH REPORT**
Information on patent family members

International application No.

**PCT/JP2022/040203**

| Patent document cited in search report | | | Publication date (day/month/year) | Patent family member(s) | | | Publication date (day/month/year) |
|---|---|---|---|---|---|---|---|
| JP | 2019-207340 | A | 05 December 2019 | US | 2019/0366584 | A1 | |
| | | | | claims 1-12 | | | |
| | | | | EP | 3575275 | A1 | |
| | | | | CN | 110550946 | A | |
| JP | 2019-199387 | A | 21 November 2019 | (Family: none) | | | |
| JP | 2017-137223 | A | 10 August 2017 | (Family: none) | | | |
| JP | 6-324294 | A | 25 November 1994 | US | 5479290 | A | |
| | | | | column 6, lines 1-15 | | | |
| WO | 2011/049102 | A1 | 28 April 2011 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011213552 A
- JP 2002293693 A
- JP 6438588 B
- JP 5397271 B
- JP 6879264 B
- JP 6881390 B

### Non-patent literature cited in the description

- Fabrication and Properties of (TbxY1-x)3Al5O12 Transparent Ceramics by Hot Isostatic pressing. *Optical Materials,* 2017, vol. 72, 58-62
- Promising Materials for High Power Laser Isolator. *Laser Tech Journal,* 2016, vol. 13 (3), 18-21
- Effects of rare-earth doping on thermal conductivity in Y3Al5O12 crystals. *Optical Materials,* 2009, vol. 31 (5), 720-724
- Crystal growth and properties of (Lu, Y)3Al5O12. *Journal of Crystal Growth,* 2004, vol. 260 (2), 159-165
- Thermal and laser properties of Yb: LuAG for kW thin disk lasers. *Optical Express,* 2010, vol. 18 (20), 20712-20722
- Magneto-optical property of terbium-lutetium-aluminum garnet crystals. *Optical Materials,* 2017, vol. 66, 207-210